# EUROPÄISCHE PATENTSCHRIFT

(11) **EP 2 227 671 B1**
(45) Veröffentlichungstag und Bekanntmachung des Hinweises auf die Patenterteilung: **10.07.2013**
(21) Anmeldenummer: 08869564.8
(22) Anmeldetag: 23.12.2008
(51) Int. Cl.: G01B 11/14, G01S 5/16, G01S 11/12

(54) **ANORDNUNG UND VERFAHREN ZU EINER BESTIMMUNG EINER POSITION UND/ODER ORIENTIERUNG ZWEIER OBJEKTE RELATIV ZUEINANDER**
ARRANGEMENT AND METHOD FOR DETERMINATION OF A POSITION AND/OR ORIENTATION OF TWO OBJECTS RELATIVE TO ONE ANOTHER
DISPOSITIF ET PROCÉDÉ DE DÉTERMINATION DE LA POSITION ET/OU DE L' ORIENTATION DE DEUX OBJETS L'UN PAR RAPPORT À L'AUTRE

(30) Priorität: 05.01.2008 DE 102008003282
(43) Veröffentlichungstag der Anmeldung: 15.09.2010
(73) Patentinhaber: µ-GPS Optics GmbH, 98617 Meiningen (DE)
(72) Erfinder: WERNER, Gerald, 98617 Meiningen (DE); MÜLLER, Claus-Georg, 80469 München (DE)
(74) Vertreter: Liedtke, Markus
(86) Internationale Anmeldenummer: PCT/EP2008/068213
(87) Internationale Veröffentlichungsnummer: WO 2009/087061

(56) Entgegenhaltungen:
- DE-A1- 10 118 392
- FR-A- 2 832 510
- US-A1- 2007 024 845
- US-B1- 6 590 664

## Beschreibung

Die Erfindung betrifft eine Anordnung und ein Verfahren zu einer Bestimmung einer Position und/oder Orientierung zweier Objekte relativ zueinander.

Aus DE 101 18 392 A1 ist ein System zum Bestimmen einer Position und/oder Orientierung zweier Objekte relativ zueinander bekannt. Dabei ist vorgesehen, wenigstens drei Abstände zwischen einem Ort an einem ersten der beiden Objekte und wenigstens drei Orten an dem zweiten der beiden Objekte interferometrisch zu bestimmen. Dazu ist eine Lichtquelle ausreichend kohärenter Strahlung vorgesehen, um ein von den Abständen der Orte abhängiges Interferenzsignal zu erzeugen. Dabei wird von der Lichtquelle abgeleitete Strahlung mit Strahlung überlagert, die einen Messzweig durchlaufen hat, der die Strecken zwischen den auf dem ersten Objekt einerseits und dem auf dem zweiten Objekt andererseits vorgesehenen Orte als optischen Weg umfasst.

Die US 2007/0024845 A1 offenbart eine Messvorrichtung zur Bestimmung von Abständen und/oder Positionen mit einer Sendeeinheit zum Aussenden wenigstens zweier Lichtsignale, einer Empfangseinheit zum zeitaufgelösten Empfangen dieser Lichtsignale und Mitteln zum Bestimmen von Abständen und/oder Positionen der Empfangseinheit relativ zur Sendeeinheit durch Auswertung der zeitlichen Struktur der von der Empfangseinheit empfangenen Lichtsignale.

Die FR 2 832 510 A1 offenbart eine Vorrichtung zur Bestimmung einer Position einer Strahlungsquelle mittels wenigstens zweier Empfangseinheiten und wenigstens einer Rechnereinheit durch eine Bestimmung eines Abstandes zwischen der Strahlungsquelle und wenigstens einer Empfangseinheit durch Auswertung von Signalstärken von den Empfangseinheiten empfangener Signale.

Die US 6590664 B1 offenbart ein interferometrisches System mit mehreren Lichtleitern und diese koppelnden optischen Kopplungseinheiten.

Das aus der DE 101 18 392 A1 bekannte System umfasst die Lichtquelle kohärenter Strahlung, eine Strahlführung zur Bereitstellung des Messzweiges für einen Messstrahl, einen Strahlungsintensitätsmesser zum Erfassen des Interferenzsignals und einen Rechner. Der Rechner ist vorgesehen, um aus Signalen des Strahlungsintensitätsmessers optische Weglängen des Messzweiges und daraus die Position und/oder Orientierung der beiden Objekte zueinander zu ermitteln.

Dabei umfasst der Messzweig wenigstens einen an einem ersten der beiden Objekte fest anbringbaren Emitter zum Aussenden dem Messzweig zugeführter Strahlung in einen Raum zwischen den beiden Objekten, wenigstens drei an dem zweiten der beiden Objekte anbringbare Retroreflektoren und wenigstens einen an dem ersten der beiden Objekte anbringbaren Empfänger.

Dabei ist vorgesehen, dass der wenigstens eine Emitter die Strahlung in einen solchen Raumwinkelbereich aussendet, dass die wenigstens drei Retroreflektoren darin enthalten sind. Ferner ist vorgesehen, dass die Retroreflektoren von dem wenigstens einen Emitter ausgesandte Strahlung reflektieren und ein Teil dieser reflektierten Strahlung von dem wenigstens einen Empfänger empfangen und dem Strahlungsintensitätsmesser zugeführt wird.

Das System arbeitet vorzugsweise nach dem Prinzip der optischen Kohärenztomografie bzw. der Weißlichtinterferometrie mit einer Weißlichtquelle als Lichtquelle. Dazu wird Licht der Lichtquelle in einen Referenzstrahl, der einem Referenzzweig zugeführt wird, und einen Messstrahl, der dem Messzweig zugeführt wird, aufgeteilt. Der Referenzzweig umfasst eine Vorrichtung zur Bereitstellung einer änderbaren optischen Weglänge, durch die eine von dem Referenzstrahl durchlaufene optische Weglänge einstellbar ist. Nach dem Durchlaufen des Messzweiges bzw. des Referenzzweiges werden der Messstrahl und der Referenzstrahl zusammengeführt, überlagert und dem Strahlungsintensitätsmesser zugeführt, mittels dessen ein sich durch die Überlagerung ergebendes Interferenzsignal erfassbar ist.

Ferner ist aus der DE 101 18 392 A1, dessen Lehren vollständig in die Offenbarung zur vorliegenden Erfindung einbezogen sein sollen, ein Verfahren zum Bestimmen einer Position und einer Orientierung zweier Objekte relativ zueinander bekannt. Dabei werden wenigstens neun Abstände ermittelt, wobei ein jeder Abstand zwischen einem Ort des ersten Objekts und einem Ort des zweiten Objekts ermittelt wird und ein jeder der Abstände zwischen verschiedenen Orten des ersten und des zweiten Objekts ermittelt wird. Aus diesen neun Abständen wird dann die Position und Orientierung der beiden Objekte relativ zueinander berechnet, wobei die Berechnung nicht-iterativ ist.

Ein Nachteil des bekannten Systems ist, dass die Fertigung der vorgesehenen Retroreflektoren aufwendig und daher kostenintensiv ist. Ferner ist nachteilig, dass die Lichtausbeute in dem Messzweig relativ gering ist, da nur ein Teil des von dem Emitter ausgesandten Lichts die Retroreflektoren erreicht und nur ein Teil des von den Retroreflektoren reflektierten Lichts den wenigstens einen Empfänger erreicht. Dadurch wird insbesondere eine relativ leistungsstarke und damit kostspielige Lichtquelle benötigt, um eine ausreichende Signalqualität zu erzielen. Ein weiterer Nachteil ist, dass es aufwendig und kostspielig ist, das System derart auszuführen, dass sich ein Signal des Strahlungsintensitätsmessers eindeutig einem der Retroreflektoren zuordnen lässt. Eine derartige Zuordnung ist notwendig, um die Position und/oder Orientierung der beiden Objekte relativ zueinander zu bestimmen. Nachteilig ist außerdem, dass es relativ zeitaufwendig ist, die in dem Referenzzweig vorgesehene Vorrichtung zur Bereitstellung einer änderbaren optischen Weglänge auf die Abstände des jeweiligen Retroreflektors zu dem wenigstens einen Emitter und wenigstens einen Empfänger einzustellen, da die Abstandsbestimmungen für die verschiedenen Retroreflektoren nacheinander erfolgen müssen.

Der Erfindung liegt die Aufgabe zu Grunde, eine verbesserte Anordnung und ein verbessertes Verfahren zu einer Bestimmung einer Position und/oder Orientierung zweier Objekte relativ zueinander anzugeben.

Die Aufgabe wird erfindungsgemäß durch eine Anordnung mit den in Anspruch 1 angegebenen Merkmalen und ein Verfahren mit den in Anspruch 9 angegebenen Merkmalen gelöst.

Vorteilhafte Ausgestaltungen der Erfindung sind Gegenstand der Unteransprüche.

Die erfindungsgemäße Anordnung zum Bestimmen einer Position und/oder Orientierung eines ersten Objektes und eines zweiten Objektes relativ zueinander umfasst eine Lichtquelle kohärenter Strahlung, eine erste Strahlteileinheit zur Aufteilung von Licht auf einen Messzweig und wenigstens einen Referenzzweig, eine in dem Messzweig an dem ersten Objekt fest anbringbare Lichtemissionseinrichtung zum Aussenden von Licht in einen Raum zwischen den beiden Objekten, eine Lichtdetektionseinrichtung, der Licht aus dem Messzweig und aus dem wenigstens einen Referenzzweig zuführbar ist, und eine Auswertungseinheit, der Lichtintensitätssignale der Lichtdetektionseinrichtung zuführbar sind.

Ferner umfasst die erfindungsgemäße Anordnung wenigstens drei an dem zweiten Objekt fest anbringbare Lichtempfangseinheiten, eine Lichtleiteinrichtung, mittels derer von den Lichtempfangseinheiten empfangenes Licht der Lichtdetektionseinrichtung zuführbar ist, sowie wenigstens eine optische Weglängeneinstellungseinrichtung in dem Messzweig und/oder dem wenigstens einen Referenzzweig, mittels derer eine optische Weglänge veränderbar ist.

Das erfindungsgemäße Verfahren sieht vor, dass die Position und/oder Orientierung eines ersten Objektes und eines zweiten Objektes relativ zueinander aus Abständen wenigstens eines Ortes an dem ersten Objekt zu wenigstens drei nicht kollinearen Orten an dem zweiten Objekt ermittelt wird. Dabei wird jeder dieser Abstände durch eine interferometrische Bestimmung einer optischen Weglänge zwischen dem wenigstens einen Ort an dem ersten Objekt und dem jeweiligen der wenigstens drei Orte an dem zweiten Objekt ermittelt. Dabei wird mittels einer Lichtquelle eine kohärente Strahlung ausgesendet, mittels einer ersten Strahlteileinheit Licht der Lichtquelle auf einen Messzweig und wenigstens einen Referenzzweig aufgeteilt, mittels einer in dem Messzweig an dem ersten Objekt fest angebrachten Lichtemissionseinrichtung Licht in einen Raum zwischen den beiden Objekten ausgesendet, Licht aus dem Messzweig und aus dem wenigstens einen Referenzzweig einer Lichtdetektionseinrichtung zugeführt, Lichtintensitätssignale der Lichtdetektionseinrichtung einer Auswertungseinheit zugeführt und mittels wenigstens einer optischen Weglängeneinstellungseinrichtung eine optische Weglänge in dem Messzweig und/oder dem wenigstens einen Referenzzweig verändert. Das erfindungsgemäße Verfahren zeichnet sich dadurch aus, dass an den wenigstens drei Orten an dem zweiten Objekt angebrachten Lichtempfangseinheiten von der Lichtemissionseinrichtung ausgesendetes Licht zugeführt wird und der Lichtdetektionseinrichtung von jeder der Lichtempfangseinheiten empfangenes Licht zugeführt wird.

Im Detail umfasst die Lichtleiteinrichtung der erfindungsgemäßen Anordnung bevorzugt für jede der Lichtempfangseinheiten einen Lichtleiter, mittels dessen der Lichtdetektionseinrichtung von der jeweiligen Lichtempfangseinheit empfangenes Licht zuführbar ist. Ferner umfassen die Lichtempfangseinheiten vorzugsweise jeweils ein Lichtleiterende eines dieser Lichtleiter der Lichtleiteinrichtung, durch das Licht in den jeweiligen Lichtleiter einkoppelbar ist.

Durch die Verwendung derartiger Lichtempfangseinheiten kann auf Retroreflektoren verzichtet werden, deren Verwendung aus dem Stand der Technik bekannt ist. Dies ist unter anderem deshalb vorteilhaft, weil die Lichtempfangseinheiten wesentlich kostengünstiger als Retroreflektoren sind. Ferner erhöht die Verwendung der Lichtempfangseinheiten anstelle von Retroreflektoren die in dem Messzweig erreichbare Ausbeute von für die Messung verfügbarem Licht, da eine Reflexion von Licht im Messzweig und dadurch bedingte Strahlungsverluste entfallen. Als Konsequenz wird eine bessere Signalqualität erreichbar und/oder es kann eine leistungsschwächere und kostengünstigere Lichtquelle eingesetzt werden.

Bevorzugt umfasst jede der Lichtempfangseinheiten ferner eine Kollimatoreinheit, mittels derer Licht zu dem Lichtleiterende des jeweiligen Lichtleiters hin bündelbar ist. Dadurch werden die Lichtausbeute für die Messungen und die Signalqualität weiter erhöht.

Die Lichtdetektionseinrichtung umfasst bevorzugt für jede Lichtempfangseinheit einen Lichtdetektor, dem mittels des zugehörigen Lichtleiters von der jeweiligen Lichtempfangseinheit empfangenes Licht zuführbar ist. Eine einfachere Ausführung mit nur einem Lichtdetektor ist jedoch ebenfalls möglich. Diesem wird zu jedem Zeitpunkt jeweils Licht nur einer der Lichtempfangseinheiten zugeführt, wobei die jeweilige Lichtempfangseinheit auswählbar ist, beispielsweise durch einen optischen Schalter, der wahlweise einen der Lichtleiter der Lichtleiteinrichtung mit dem Lichtdetektor verbindet.

Die Lichtquelle ist bevorzugt eine Lichtquelle spektral breitbandiger Strahlung mit einer kurzen Kohärenzlänge, so dass eine interferierende Überlagerung eines ersten Lichtstrahls aus dem Messzweig und eines zweiten Lichtstrahls aus dem wenigstens einen Referenzzweig eine maximale konstruktive Interferenz ergibt, wenn beide Lichtstrahlen dieselbe optische Weglänge durchlaufen. Dabei ist die optische Weglänge des ersten Lichtstrahls aus dem Messzweig und/oder des zweiten Lichtstrahls aus dem wenigstens einen Referenzzweig mittels der wenigstens einen optischen Weglängeneinstellungseinrichtung veränderbar.

Die Anordnung und Ausführung der wenigstens einen optischen Weglängeneinstellungseinrichtung in dem Messzweig und/oder dem Referenzzweig kann dabei auf unterschiedliche Weisen ausgestaltet und dem jeweiligen Verwendungszweck der Anordnung angepasst werden. Eine einfache Ausführung der erfindungsgemäßen Anordnung sieht beispielsweise genau eine optische Weglängeneinstellungseinrichtung in dem Messzweig oder dem wenigstens einen Referenzzweig hinter der ersten Strahlteileinheit vor, komplexere Ausführungen sehen mehrere optische Weglängeneinstellungseinrichtungen in dem Messzweig und/oder dem wenigstens einen Referenzzweig vor. Die Verwendung mehrerer optischer Weglängeneinstellungseinrichtungen hat den Vorteil, dass dadurch optische Weglängen in dem Messzweig und/oder dem wenigstens einen Referenzzweig gleichzeitig und unabhängig voneinander veränderbar sind. Dadurch lässt sich insbesondere eine Messdauer zur Bestimmung mehrerer optischer Weglängen verringern. Ferner können optische Weglängeneinstellungseinrichtungen miteinander kombiniert werden, die einen verschieden großen Hub haben, so dass mit ihnen optische Weglängen jeweils verschieden schnell veränderbar sind. Dadurch können optische Weglängen insbesondere flexibel an Bewegungen des ersten und zweiten Objektes relativ zueinander angepasst werden, ohne die Messdauer wesentlich zu erhöhen.

Vorteilhafte Ausgestaltungen der erfindungsgemäßen Anordnung sehen vor, dass mittels der ersten Strahlteileinheit Licht der Lichtquelle auf den Messzweig und wenigstens drei Referenzzweige aufteilbar ist, oder dass mittels der ersten Strahlteileinheit Licht der Lichtquelle auf den Messzweig und genau einen Referenzzweige aufteilbar ist und mittels einer zweiten Strahlteileinheit der genau eine Referenzzweig in wenigstens drei Teilreferenzzweige aufteilbar ist. Die wenigstens drei Referenz- oder Teilreferenzzweige sind je einem der Lichtdetektoren zugeordnet, so dass jedem Lichtdetektor Licht aus genau einem der wenigstens drei Referenz- oder Teilreferenzzweige zuführbar ist. Somit ist mittels jedes der Lichtdetektoren ein Lichtintensitätssignal ermittelbar, das durch eine Interferenz des dem jeweiligen Lichtdetektor zugeführten Lichts aus einem Referenz- oder Teilreferenzzweig und aus dem Messzweig entsteht. Da jeder Lichtdetektor bevorzugt auch jeweils einer Lichtempfangseinheit zugeordnet ist, kann dadurch ein Lichtintensitätssignal der Lichtdetektionseinrichtung unmittelbar einer der Lichtempfangseinheiten zugeordnet werden. Dadurch wird die Signaizuordnung erheblich vereinfacht gegenüber dem aus dem Stand der Technik bekannten System, bei dem die Zuordnung eines Signals des Strahlungsintensitätsmessers zu einem der Retroreflektoren aufwendig ist.

Eine weitere vorteilhafte Ausgestaltung der erfindungsgemäßen Anordnung sieht vor, dass die Lichtemissionseinrichtung eine Anzahl von Lichtemittem, beispielsweise drei Lichtemitter, aufweist. Vorzugsweise weist die Lichtemissionseinrichtung in diesem Fall eine Umschalteinheit auf, mittels derer Licht des Messzweiges einer auswählbaren Teilmenge dieser Lichtemitter zuführbar ist. Dadurch ist einstellbar, von welchem oder von welchen der Lichtemitter Licht abgestrahlt wird. Dies kann verwendet werden, um Abstände verschiedener Orte an dem einem der beiden Objekte zu jeweils verschiedenen Orten an dem anderen der beiden Objekte und daraus neben einer Position auch eine Orientierung der beiden Objekte relativ zueinander zu ermitteln.

Eine weitere vorteilhafte Ausgestaltung der erfindungsgemäßen Anordnung sieht vor, dass die Lichtemissionseinrichtung eine Lichtführungseinheit, beispielsweise mit einem Scanner, z.B. einem Galvanometerscanner, umfasst, mittels derer eine Richtung steuerbar ist, in welche Licht von der Lichtemissionseinrichtung abstrahlbar ist. Dadurch kann die Lichtabstrahlung der Lichtemissionseinrichtung auf einen Raumwinkel reduziert werden, der jeweils wenigstens drei Lichtempfangseinheiten enthält. Dies hat den Vorteil einer Konzentration der Lichtabstrahlung auf einen für die Messung relevanten Raumwinkel und somit einer weiteren Steigerung der Lichtausbeute und Signalqualität für die Messung.

Das erfindungsgemäße Verfahren sieht im Detail bevorzugt vor, dass der Lichtdetektionseinrichtung von jeder der Lichtempfangseinheiten Licht über jeweils einen Lichtleiter zugeführt wird und dass jeder Lichtempfangseinheit in der Lichtdetektionseinrichtung ein Lichtdetektor zugeordnet wird, dem von der jeweiligen Lichtempfangseinheit über den zugehörigen Lichtleiter Licht zugeführt wird.

In einer vorteilhaften Ausgestaltung des erfindungsgemäßen Verfahrens wird Licht der Lichtquelle mittels der ersten Strahlteileinheit auf einen Messzweig, der die Lichtwege zwischen dem wenigstens einen Ort an dem ersten Objekt und dem jeweiligen der wenigstens drei Orte an dem zweiten Objekt umfasst, und genau einen Referenzzweig aufgeteilt. Der genau eine Referenzzweig wird mittels einer zweiten Strahlteileinheit in wenigstens drei Teilreferenzzweige aufgeteilt, und jeder Teilreferenzzweig wird jeweils einem der Lichtdetektoren in der Lichtdetektionseinrichtung zugordnet, so dass jedem Lichtdetektor Licht aus jeweils einem Teilreferenzzweig zugeführt wird. Ferner wird eine erste optische Weglängeneinstellungseinrichtung in dem genau einen Referenzzweig zwischen der ersten Strahlteileinheit und der zweiten Strahlteileinheit oder in dem Messzweig zwischen der ersten Strahlteileinheit und der Lichtemissionseinrichtung angeordnet, und in jedem der wenigstens drei Teilreferenzzweige wird eine weitere optische Weglängeneinstellungseinrichtung angeordnet.

In einer alternativen Ausgestaltung des Verfahrens wird mittels der ersten Strahlteileinheit Licht der Lichtquelle auf den Messzweig und wenigstens drei Referenzzweige aufgeteilt, die jeweils einem der Lichtdetektoren zuordnet werden. In dem Messzweig wird eine erste optische Weglängeneinstellungseinrichtung zwischen der ersten Strahlteileinheit und der Lichtemissionseinrichtung angeordnet, und in jedem der wenigstens drei Referenzzweige wird eine weitere optische Weglängeneinstellungseinrichtung angeordnet.

In beiden Ausgestaltungen des Verfahrens wird mittels der ersten optischen Weglängeneinstellungseinrichtung eine optische Weglänge bevorzugt schneller verändert als mit jeder der weiteren optischen Weglängeneinstellungseinrichtungen.

Mittels jedes der Lichtdetektoren wird ein Lichtintensitätssignal erzeugt, das von einer Lichtintensität abhängt, die durch eine Interferenz des dem jeweiligen Lichtdetektor zugeführten Lichts aus dem wenigstens einem Referenzzweig und aus dem Messzweig entsteht, und dieses Lichtintensitätssignal wird der Auswertungseinheit zugeführt.

Eine weitere bevorzugte Ausgestaltung des Verfahrens sieht vor, dass eine Richtung, in welche Licht von dem wenigstens einen Ort an dem ersten Objekt abgestrahlt wird, derart gesteuert wird, dass die Abstrahlrichtung zu den wenigstens drei Orten an dem zweiten Objekt hin ausgerichtet wird.

Weitere Vorteile, Merkmale und Einzelheiten der Erfindung werden im Folgenden anhand von Ausführungsbeispielen unter Bezugnahme auf Zeichnungen beschrieben. Dabei zeigen:
- Figur 1: ein Blockdiagramm einer Anordnung zur Bestimmung einer Position und/oder Orientierung zweier Objekte relativ zueinander mit einer optischen Weglängeneinstellungseinrichtung,
- Figur 2: ein Blockdiagramm einer Anordnung zur Bestimmung einer Position und/oder Orientierung zweier Objekte relativ zueinander mit drei optischen Weglängeneinstellungseinrichtungen, und
- Figur 3: ein Blockdiagramm einer Anordnung zur Bestimmung einer Position und/oder Orientierung zweier Objekte relativ zueinander mit vier optischen Weglängeneinstellungseinrichtungen.

Einander entsprechende Teile sind in allen Figuren mit denselben Bezugszeichen versehen.

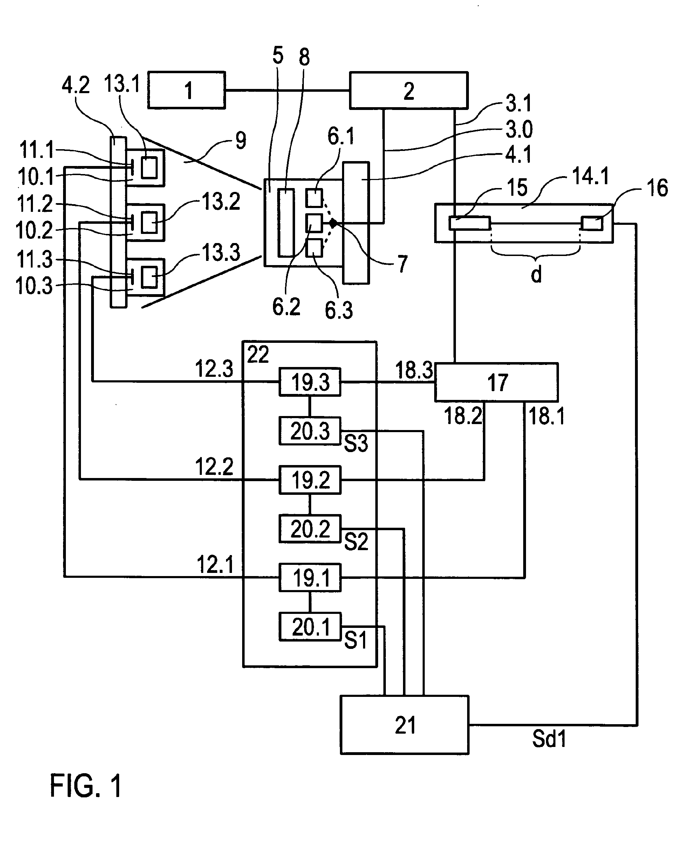

**Figur 1** zeigt schematisch als Blockdiagramm ein erstes Ausführungsbeispiel einer erfindungsgemäßen Anordnung zur Bestimmung einer Position und/oder Orientierung eines ersten Objektes 4.1 relativ zu einem zweiten Objekt 4.2. Die Anordnung umfasst eine Lichtquelle 1 kohärenter Strahlung, eine erste Strahlteileinheit 2, mittels derer Licht der Lichtquelle 1 auf einen Messzweig 3.0 und einen Referenzzweig 3.1 aufteilbar ist, eine optische Weglängeneinstellungseinrichtung 14.1 in dem Referenzzweig 3.1, eine an dem ersten Objekt 4.1 fest anbringbare Lichtemissionseinrichtung 5 in dem Messzweig 3.0, drei an dem zweiten Objekt 4.2 fest anbringbare Lichtempfangseinheiten 10.1 bis 10.3, eine Lichtdetektionseinrichtung 22, drei Lichtleiter 12.1 bis 12.3, die jeweils eine der Lichtempfangseinheiten 10.1 bis 10.3 mit der Lichtdetektionseinrichtung 22 verbinden, eine zweite Strahlteileinheit 17, sowie eine Auswertungseinheit 21, der Lichtintensitätssignale S1 bis S3 der Lichtdetektionseinrichtung 22 zuführbar sind.

Die Lichtquelle 1 ist bevorzugt eine spektral breitbandige Quelle kohärenter Strahlung mit einer kurzen Kohärenzlänge bis zu einigen Millimetern, vorzugsweise höchstens 100 Mikrometern.

Die Lichtemissionseinrichtung 5 umfasst in diesem Ausführungsbeispiel drei Lichtemitter 6.1 bis 6.3 und eine Umschalteinheit 7, mittels derer Licht des Messzweiges 3.0 wahlweise einem der drei Lichtemitter 6.1 bis 6.3 zuführbar ist. Von dem ausgewählten Lichtemitter 6.1 bis 6.3 ist das Licht in eine Richtung zu den Lichtempfangseinheiten 10.1 bis 10.3 hin abstrahlbar. Bevorzugt umfasst die Lichtemissionseinrichtung 5 ferner eine Lichtkollimationseinrichtung 8, mittels derer das von dem ausgewählten Lichtemitter 6.1 bis 6.3 abgestrahlte Licht derart bündelbar ist, dass es auf einen möglichst kleinen Raumwinkel 9 begrenzt ist, der jedoch die Lichtempfangseinheiten 10.1 bis 10.3 enthält.

In einer vorteilhaften Ausgestaltung des Ausführungsbeispiels umfasst die Lichtemissionseinrichtung 5 ferner eine nicht dargestellte Lichtführungseinrichtung, mittels derer die Richtung, in die die Lichtemissionseinrichtung 5 Licht abgestrahlt, derart steuerbar ist, dass diese Abstrahlrichtung zu den Lichtempfangseinheiten 10.1 bis 10.3 ausgerichtet ist. Dazu kann eine momentane Einstellung der Abstrahlrichtung beispielsweise mit Hilfe einer Position der beiden Objekte 4.1 und 4.2 relativ zueinander festgelegt werden, die mittels des erfindungsgemäßen Verfahrens zu einem vorhergehenden Zeitpunkt bereits bestimmt wurde. Dadurch kann die Abstrahlrichtung zu jedem Zeitpunkt zu den Lichtempfangseinheiten 10.1 bis 10.3 hin orientiert werden, so dass auch bei einer Bewegung der Objekte 4.1 und 4.2 relativ zueinander die Lichtabstrahlung auf einen kleinen Raumwinkel 9 begrenzt werden kann. Eine geeignete Lichtführungseinrichtung umfasst beispielsweise einen Galvanometerscanner zur Steuerung der Abstrahlrichtung der Lichtemissionseinrichtung 5.

Die Lichtempfangseinheiten 10.1 bis 10.3 umfassen in diesem Ausführungsbeispiel jeweils ein Lichtleiterende 11.1 bis 11.3 eines der Lichtleiter 12.1 bis 12.3, wobei über das jeweilige Lichtleiterende 11.1 bis 11.3 Licht in den zugehörigen Lichtleiter 12.1 bis 12.3 einkoppelbar ist. Ferner umfassen die Lichtempfangseinheiten 10.1 bis 10.3 bevorzugt jeweils eine Kollimatoreinheit 13.1 bis 13.3 mittels derer von der Lichtemissionseinrichtung 5 abgestrahltes Licht zu dem zugehörigen Lichtleiterende 11.1 bis 11.3 hin bündelbar ist. Von den Lichtempfangseinheiten 10.1 bis 10.3 empfangenes Licht wird der Lichtdetektionseinrichtung 22 mittels der Lichtleiter 12.1 bis 12.3 zugeführt.

Innerhalb der optischen Weglängeneinstellungseinrichtung 14.1 durchläuft Licht aus dem Referenzzweig 3.1 eine einstellbare optische Weglänge. Danach wird das Licht aus der optischen Weglängeneinstellungseinrichtung 14.1 herausgeführt und der zweiten Strahlteileinheit 17 zugeführt, von der es auf drei Teilreferenzzweige 18.1 bis 18.3 aufteilbar ist. Die Teilreferenzzweige 18.1 bis 18.3 sind jeweils mit der Lichtdetektionseinrichtung 22 verbunden, beispielsweise über Lichtleiter, so dass der Lichtdetektionseinrichtung 22 aus jedem der Teilreferenzzweige 18.1 bis 18.3 Licht zuführbar ist.

Die optische Weglängeneinstellungseinrichtung 14.1 kann auf verschiedene, aus dem Stand der Technik bekannte Weisen ausgeführt werden. Beispielsweise umfasst sie eine optische Duplexereinheit 15 und eine Reflektoreinheit 16 in einem einstellbaren Abstand d voneinander. Mittels der optischen Duplexereinheit 15 ist eingangsseitig in die optische Weglängeneinstellungseinrichtung 14.1 eintretendes Licht zu der Reflektoreinheit 16 hin lenkbar und von der Reflektoreinheit 16 kommendes Licht aus der optischen Weglängeneinstellungseinrichtung 14.1 herausführbar. Von der optischen Duplexereinheit 15 kommendes Licht ist von der Reflektoreinheit 16 derart reflektierbar, dass es zu der optischen Duplexereinheit 15 zurückgeworfen wird. Dadurch durchläuft eingangsseitig in die optische Weglängeneinstellungseinrichtung 14.1 eintretendes Licht innerhalb der optischen Weglängeneinstellungseinrichtung 14.1 zweimal eine Strecke der Länge d, deren optische Weglänge sich aus dem Abstand d und dem Brechungsindex des sich zwischen der optischen Duplexereinheit 15 und der Reflektoreinheit 16 befindlichen Mediums ergibt. Die Einstellung des Abstandes d der optischen Duplexereinheit 15 von der Reflektoreinheit 16 erfolgt beispielsweise über einen nicht dargestellten, von der Auswertungseinheit 21 mittels eines Steuersignals Sd1 steuerbaren Antrieb, mittels dessen die Reflektoreinheit 16 verschiebbar ist.

Die Lichtdetektionseinrichtung 22 umfasst in diesem Ausführungsbeispiel drei Strahlzusammenführungseinheiten 19.1 bis 19.3 sowie drei Lichtdetektoren 20.1 bis 20.3. Jeder der Strahlzusammenführungseinheiten 19.1 bis 19.3 ist über jeweils einen der Lichtleiter 12.1 bis 12.3 von der zugehörigen Lichtempfangseinheit 10.1 bis 10.3 empfangenes Licht und Licht aus jeweils einem Teilreferenzzweig 18.1 bis 18.3 zuführbar. Die Strahlzusammenführungseinheiten 19.1 bis 19.3 überlagern jeweils das ihnen zugeführte Licht und führen es jeweils einem der Lichtdetektoren 20.1 bis 20.3 zu.

Die Lichtdetektoren 20.1 bis 20.3 erzeugen jeweils ein von der Intensität der ihnen zugeführten Strahlung abhängiges Lichtintensitätssignal S1 bis S3 und führen es der Auswertungseinheit 21 zu. Aufgrund der kurzen Kohärenzlänge des von der Lichtquelle 1 erzeugten Lichts ist dabei die Intensität des einem der Lichtdetektoren 20.1 bis 20.3 zugeführten Lichts dann maximal, wenn das aus dem Messzweig 3.0 stammende Licht die gleiche optische Weglänge durchlaufen hat wie das aus dem Referenzzweig 3.1 stammende Licht. Aus der Kenntnis der in dem jeweiligen Teilreferenzzweig 18.1 bis 18.3 durchlaufenen optischen Weglänge ist daher die von dem entsprechenden aus dem Messzweig 3.0 stammenden Licht durchlaufene optische Weglänge ermittelbar, indem in dem Referenzzweig 3.1 die optische Weglänge mittels der optischen Weglängeneinstellungseinrichtung 14.1 so eingestellt wird, dass das Lichtintensitätssignal S1 bis S3 des jeweiligen Lichtdetektors 20.1 bis 20.3 ein Intensitätsmaximum anzeigt.

Auf diese Weise ist die optische Weglänge ermittelbar, die von Licht in dem Messzweig 3.0 durchlaufen wird, das von einer der Lichtempfangseinheiten 10.1 bis 10.3 empfangen wird. Daraus ist der Abstand der jeweiligen Lichtempfangseinheit 10.1 bis 10.3 von dem bei der Messung jeweils ausgewählten Lichtemitter 6.1 bis 6.3 ermittelbar, sofern die übrige von dem Licht des Messzweiges 3.0 durchlaufene optische Weglänge und der Brechungsindex des Mediums in dem Raum zwischen den Objekten 4.1 und 4.2 bekannt sind. Aus den auf diese Weise ermittelbaren Abständen der einzelnen Lichtemitter 6.1 bis 6.3 zu jeder der Lichtempfangseinheiten 10.1 bis 10.3 ist mittels der Auswertungseinheit 21 auf eine aus dem Stand der Technik bekannte Weise eine relative Position und Orientierung der Objekte 4.1 und 4.2 ermittelbar.

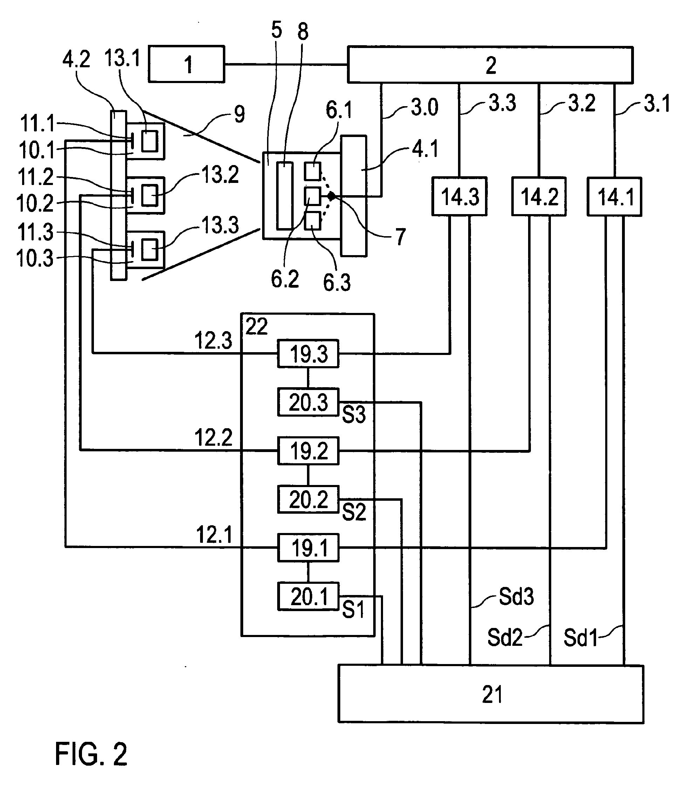

**Figur 2** zeigt schematisch als Blockdiagramm ein zweites Ausführungsbeispiel einer erfindungsgemäßen Anordnung zur Bestimmung einer Position und/oder Orientierung eines ersten Objektes 4.1 relativ zu einem zweiten Objekt 4.2.

Dieses Ausführungsbeispiel unterscheidet sich von dem in Figur 1 dargestellten ersten Ausführungsbeispiel dadurch, dass von der Lichtquelle 1 ausgesandtes Licht mittels der ersten Strahlteileinheit 2 auf einen Messzweig 3.0 und drei Referenzzweige 3.1 bis 3.3 aufteilbar ist und jeder der Referenzzweige 3.1 bis 3.3 eine eigene optische Weglängeneinstellungseinrichtung 14.1 bis 14.3 umfasst und mit jeweils einer der drei Strahlzusammenführungseinheiten 19.1 bis 19.3 verbunden ist.

Dabei sind die innerhalb der optischen Weglängeneinstellungseinrichtungen 14.1 bis 14.3 durchlaufenden optischen Weglängen unabhängig voneinander mittels jeweils eines Steuersignals Sd1 bis Sd3 einstellbar, das der jeweiligen optischen Weglängeneinstellungseinrichtung 14.1 bis 14.3 von der Auswertungseinheit 21 zuführbar ist. Dadurch sind die in den drei Referenzzweigen 3.1 bis 3.3 durchlaufenen optischen Weglängen gleichzeitig und unabhängig voneinander einstellbar.

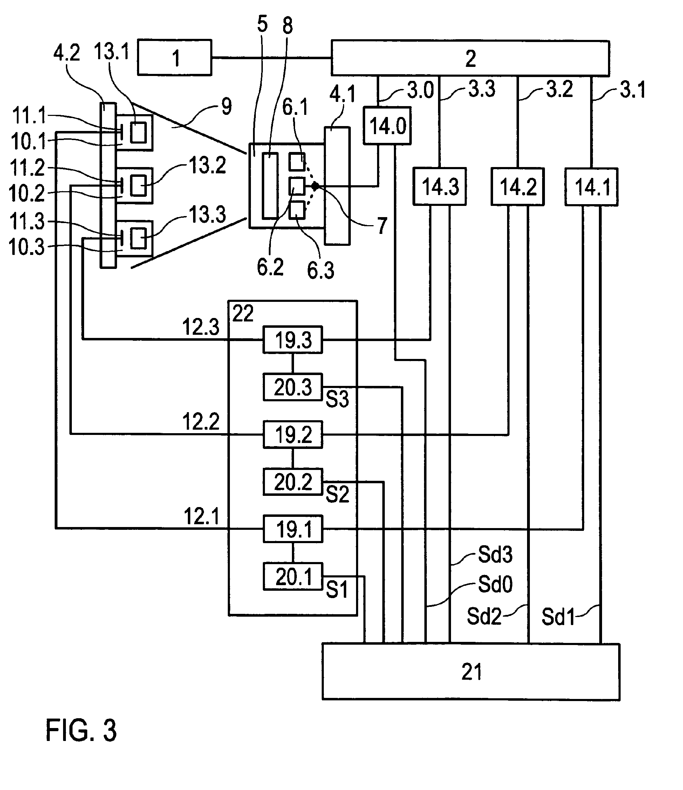

**Figur 3** zeigt schematisch als Blockdiagramm ein drittes Ausführungsbeispiel einer erfindungsgemäßen Anordnung zur Bestimmung einer Position und/oder Orientierung eines ersten Objektes 4.1 relativ zu einem zweiten Objekt 4.2.

Dieses Ausführungsbeispiel unterscheidet sich von dem in Figur 2 dargestellten zweiten Ausführungsbeispiel dadurch, dass eine erste optische Weglängeneinstellungseinrichtung14.0 in dem Messzweig 3.0 zwischen der ersten Strahlteileinheit 2 und der Lichtemissionseinrichtung 5 angeordnet ist und dass dieser ersten optischen Weglängeneinstellungseinrichtung 14.0 ein Steuersignal Sd0 von der Auswertungseinheit 21 zuführbar ist.

Dabei weist die erste optische Weglängeneinstellungseinrichtung 14.0 bevorzugt einen kleineren Hub als die weiteren in den drei Referenzzweigen 3.1 bis 3.3 angeordneten optischen Weglängeneinstellungseinrichtungen 14.1 bis 14.3 auf, so dass mittels der ersten optischen Weglängeneinstellungseinrichtung 14.0 eine optische Weglänge in geringerem Maße, aber mit einer höheren Geschwindigkeit änderbar ist als mit den weiteren optischen Weglängeneinstellungseinrichtungen 14.1 bis 14.3. Dazu weist die erste optische Weglängeneinstellungseinrichtung 14.0 beispielsweise ein Piezoelement auf, mittels dessen eine mit dem Piezoelement verbindbare Reflektoreinheit 16 verschiebbar und dadurch eine optische Weglänge in dem Messzweig 3.0 veränderbar ist, während die weiteren optischen Weglängeneinstellungseinrichtungen 14.1 bis 14.3 Reflektoreinheiten 16 aufweisen, die beispielsweise jeweils mittels eines mechanischen Linearantriebes verschiebbar sind.

Eine derartige Anordnung hat den Vorteil, dass mittels der weiteren optischen Weglängeneinstellungseinrichtungen 14.1 bis 14.3 die optischen Weglängen in den Referenzzweigen 3.1 bis 3.3 einer Bewegung der beiden Objekte 4.1 und 4.2 relativ zueinander nachgeführt werden können, so dass die optischen Weglängen in den Referenzzweigen 3.1 bis 3.3 jeweils ungefähr der optischen Weglänge eines der optischen Wege in dem Messzweig 3.0 entsprechen. Beispielsweise ist so erreichbar, dass die optische Weglänge in dem ersten Referenzzweig 3.1 ungefähr der optischen Weglänge des optischen Weges im Messzweig 3.0 entspricht, der die erste Lichtempfangseinheit 10.1 durchläuft, und die optische Weglänge in dem zweiten Referenzzweig 3.2 ungefähr der optischen Weglänge des optischen Weges im Messzweig 3.0 entspricht, der die zweite Lichtempfangseinheit 10.2 durchläuft, und die optische Weglänge in dem dritten Referenzzweig 3.3 ungefähr der optischen Weglänge des optischen Weges im Messzweig 3.0 entspricht, der die dritte Lichtempfangseinheit 10.3 durchläuft. Durch eine schnelle, beispielsweise zeitlich periodische und während eines Zeitintervalls Δt durchführbare Veränderung einer optischen Weglänge der ersten optischen Weglängeneinstellungseinrichtung 14.0 ist dann bei ausreichendem Hub der ersten optischen Weglängeneinstellungseinrichtung 14.0 erreichbar, dass die optische Weglänge in jedem der Referenzzweige 3.1 bis 3.3 während des Zeitintervalls Δt wenigstens einmal genau der optischen Weglänge eines optischen Weges in dem Messzweig 3.0 gleicht.

Auf diese Weise ist mittels der weiteren Weglängeneinstellungseinrichtungen 14.1 bis 14.3 eine Grobangleichung und mittels der ersten optischen Weglängeneinstellungseinrichtung 14.0 eine Feinangleichung der optischen Weglängen in den Referenzzweigen 3.1 bis 3.3 an jeweils eine optische Weglänge in dem Messzweig 3.0 erreichbar. Dies hat gegenüber den aus dem Stand der Technik bekannten Anordnungen den Vorteil, dass dadurch über die Steuersignale Sd0 bis Sd3 und die Lichtintensitätssignale S1 bis S3 mittels der Auswertungseinheit 21 die optischen Weglängen zwischen einem Lichtemitter 6.1 bis 6.3 und den drei Lichtempfangseinheiten 10.1 bis 10.3 nahezu gleichzeitig und in Echtzeit ermittelbar sind.

**BEZUGSZEICHENLISTE**

| | |
|---|---|
| 1 | Lichtquelle |
| 2 | erste Strahlteileinheit |
| 3.0 | Messzweig |
| 3.1 bis 3.3 | Referenzzweige |
| 4.1 | erstes Objekt |
| 4.2 | zweites Objekt |
| 5 | Lichtemissionseinrichtung |
| 6.1 bis 6.3 | Lichtemitter |
| 7 | Umschalteinheit |
| 8 | Lichtkollimationseinrichtung |
| 9 | Raumwinkel |
| 10.1 bis 10.3 | Lichtempfangseinheiten |
| 11.1 bis 11.3 | Lichtleiterenden |
| 12.1 bis 12.3 | Lichtleiter |
| 13.1 bis 13.3 | Kollimatoreinheiten |
| 14.0 bis 14.3 | optische Weglängeneinstellungseinrichtungen |
| 15 | optische Duplexereinheit |
| 16 | Reflektoreinheit |
| 17 | zweite Strahlteileinheit |
| 18.1 bis 18.3 | Teilreferenzzweige |
| 19.1 bis 19.3 | Strahlzusammenführungseinheiten |
| 20.1 bis 20.3 | Lichtdetektoren |
| 21 | Auswertungseinheit |
| 22 | Lichtdetektionseinrichtung |
| S1 bis S3 | Lichtintensitätssignale |
| Sd0 bis Sd3 | Steuersignale |

## Patentansprüche

1. Anordnung zu einer Bestimmung einer Position und/oder Orientierung eines ersten Objektes (4.1) und eines zweiten Objektes (4.2) relativ zueinander durch eine interferometrische Bestimmung optischer Weglängen zwischen wenigstens einem Ort an dem ersten Objekt (4.1) und jedem von wenigstens drei Orten an dem zweiten Objekt (4.2), umfassend:
- eine Lichtquelle (1) kohärenter Strahlung,
- eine erste Strahlteileinheit (2), mittels derer Licht der Lichtquelle (1) auf einen Messzweig (3.0) und wenigstens einen Referenzzweig (3.1 bis 3.3) aufteilbar ist,
- eine in dem Messzweig (3.0) an dem ersten Objekt (4.1) fest anbringbare Lichtemissionseinrichtung (5), mittels derer Licht in einen Raum zwischen den beiden Objekten (4.1,4.2) aussendbar ist,
- eine Lichtdetektionseinrichtung (22), der Licht aus dem Messzweig (3.0) und aus dem wenigstens einen Referenzzweig (3.1 bis 3.3) zuführbar ist, und
- eine Auswertungseinheit (21), der Lichtintensitätssignale (S1 bis S3) der Lichtdetektionseinrichtung (22) zuführbar sind,
**gekennzeichnet durch**:
- wenigstens drei an dem zweiten Objekt (4.2) fest anbringbare Lichtempfangseinheiten (10.1 bis 10.3),
- eine Lichtleiteinrichtung, die für jede der wenigstens drei Lichtempfangseinheiten (10.1 bis 10.3) einen Lichtleiter (12.1 bis 12.3) umfasst, mittels dessen der Lichtdetektionseinrichtung (22) von der jeweiligen Lichtempfangseinheit (10.1 bis 10.3) empfangenes Licht zuführbar ist,
- wenigstens eine optische Weglängeneinstellungseinrichtung (14.0 bis 14.3) in dem Messzweig (3.0) und/oder dem wenigstens einen Referenzzweig (3.1 bis 3.3), mittels derer eine optische Weglänge veränderbar ist,
- wobei die wenigstens drei Lichtempfangseinheiten (10.1 bis 10.3) jeweils ein Lichtleiterende (11.1 bis 11.3) eines der Lichtleiter (12.1 bis 12.3) der Lichtleiteinrichtung umfassen, **durch** welches Licht in den jeweiligen Lichtleiter (12.1 bis 12.3) einkoppelbar ist und
- wobei die Lichtdetektionseinrichtung (22) für jede Lichtempfangseinheit (10.1 bis 10.3) einen Lichtdetektor (20.1 bis 20.3) umfasst, dem mittels des zugehörigen Lichtleiters (12.1 bis 12.3) von der jeweiligen Lichtempfangseinheit (10.1 bis 10.3) empfangenes Licht zuführbar ist und
- wobei jede der wenigstens drei Lichtempfangseinheiten (10.1 bis 10.3) eine Kollimatoreinheit (13.1 bis 13.3) umfasst, mittels derer Licht zu dem Lichtleiterende (11.1 bis 11.3) des jeweiligen Lichtleiters (12.1 bis 12.3) hin bündelbar ist,
und ferner **gekennzeichnet durch**
- entweder eine erste Strahlteileinheit (2), mittels derer Licht der Lichtquelle (1) auf den Messzweig (3.0) und genau einen Referenzzweig (3.1) aufteilbar ist, eine zweite Strahlteileinheit (17), mittels derer der genau eine Referenzzweig (3.1) in wenigstens drei Teilreferenzzweige (18.1 bis 18.3) aufteilbar ist, Elemente zur Zuführung von Licht aus jedem der wenigstens drei Teilreferenzzweige (18.1 bis 18.3) zu jeweils einem der Lichtdetektoren (20.1 bis 20.3), eine erste optische Weglängeneinstellungseinrichtung (14.0) in dem genau einen Referenzzweig (3.1) zwischen der ersten Strahlteileinheit (2) und der zweiten Strahlteileinheit (17) oder in dem Messzweig (3.0) zwischen der ersten Strahlteileinheit (2) und der Lichtemissionseinrichtung (5), und eine weitere optische Weglängeneinstellungseinrichtung (14.1 bis 14.3) in jedem der wenigstens drei Teilreferenzzweige (18.1 bis 18.3),
- oder eine erste Strahlteileinheit (2), mittels derer Licht der Lichtquelle (1) auf den Messzweig (3.0) und wenigstens drei Referenzzweige (3.1 bis 3.3) aufteilbar ist, Elemente zur Zuführung von Licht aus jedem der wenigstens drei Referenzzweige (3.1 bis 3.3) zu jeweils einem der Lichtdetektoren (20.1 bis 20.3), und eine erste optische Weglängeneinstellungseinrichtung (14.0) in dem Messzweig (3.0) zwischen der ersten Strahlteileinheit (2) und der Lichtemissionseinrichtung (5), und eine weitere optische Weglängeneinstellungseinrichtung (14.2 bis 14.4) in jedem der wenigstens drei Referenzzweige (3.1 bis 3.3),
wobei von jedem Lichtdetektor (20.1 bis 20.3) ein Lichtintensitätssignal (S 1 bis S3) erzeugbar ist, das von einer Lichtintensität abhängt, die **durch** eine Interferenz des dem jeweiligen Lichtdetektor (20.1 bis 20.3) zugeführten Lichts aus einem Referenzzweig (3.1 bis 3.3) oder Teilreferenzzweig (18.1 bis 18.3) und dem Messzweig (3.0) entsteht, wobei jedes dieser Lichtintensitätssignale (S 1 bis S3) der Auswertungseinheit (21) zuführbar ist.

2. Anordnung nach Anspruch 1,
**dadurch gekennzeichnet,**
**dass** die erste optische Weglängeneinstellungseinrichtung (14.0) einen kürzeren Hub als jede der weiteren optischen Weglängeneinstellungseinrichtungen (14.1 bis 14.3) hat, so dass eine optische Weglänge mittels der ersten optischen Weglängeneinstellungseinrichtung (14.0) schneller als mit jeder der weiteren optischen Weglängeneinstellungseinrichtungen (14.1 bis 14.3) änderbar ist.

3. Anordnung nach einem der vorhergehenden Ansprüche,
**dadurch gekennzeichnet,**
**dass** die erste optische Weglängeneinstellungseinrichtung (14.0) ein Piezoelement umfasst, mittels dessen eine optische Weglänge änderbar ist.

4. Anordnung nach einem der vorhergehenden Ansprüche,
**dadurch gekennzeichnet,**
**dass** jede der weiteren optischen Weglängeneinstellungseinrichtungen (14.1 bis 14.3) einen mechanischen Linearantrieb umfasst, mittels dessen eine optische Weglänge änderbar ist.

5. Anordnung nach einem der vorhergehenden Ansprüche,
**dadurch gekennzeichnet,**
**dass** die Lichtemissionseinrichtung (5) eine Anzahl von Lichtemittern (6.1 bis 6.3) und eine Umschalteinheit (7), mittels derer Licht aus dem Messzweig (3.0) einer auswählbaren Teilmenge der Lichtemitter (6.1 bis 6.3) zuführbar ist, aufweist.

6. Anordnung nach einem der vorhergehenden Ansprüche,
**dadurch gekennzeichnet,**
**dass** die Lichtemissionseinrichtung (5) eine Lichtführungseinrichtung umfasst, mittels derer eine Richtung steuerbar ist, in welche Licht von der Lichtemissionseinrichtung (5) abstrahlbar ist.

7. Anordnung nach Anspruch 6,
**dadurch gekennzeichnet,**
**dass** die Lichtführungseinrichtung einen Galvanometerscanner umfasst.

8. Anordnung nach einem der vorhergehenden Ansprüche,
**gekennzeichnet durch**
eine Lichtquelle (1), mittels derer eine spektral breitbandige Strahlung mit einer kurzen Kohärenzlänge aussendbar ist.

9. Verfahren zu einer Bestimmung einer Position und/oder Orientierung eines ersten Objektes (4.1) und eines zweiten Objektes (4.2) relativ zueinander aus Abständen wenigstens eines Ortes an dem ersten Objekt (4.1) zu wenigstens drei nicht kollinearen Orten an dem zweiten Objekt (4.2), wobei jeder dieser Abstände ermittelt wird durch eine interferometrische Bestimmung einer optischen Weglänge zwischen dem wenigstens einen Ort an dem ersten Objekt (4.1) und dem jeweiligen der wenigstens drei Orte an dem zweiten Objekt (4.2), wobei
- mittels einer Lichtquelle (1) eine kohärente Strahlung ausgesendet wird,
- mittels einer ersten Strahlteileinheit (2) Licht der Lichtquelle (1) auf einen Messzweig (3.0) und wenigstens einen Referenzzweig (3.1 bis 3.3) aufgeteilt wird,
- mittels einer in dem Messzweig (3.0) an dem ersten Objekt (4.1) fest angebrachten Lichtemissionseinrichtung (5) Licht in einen Raum zwischen den beiden Objekten (4.1,4.2) ausgesendet wird,
- Licht aus dem Messzweig (3.0) und aus dem wenigstens einen Referenzzweig (3.1 bis 3.3) einer Lichtdetektionseinrichtung (22) zugeführt wird,
- Lichtintensitätssignale (S1 bis S3) der Lichtdetektionseinrichtung (22) einer Auswertungseinheit (21) zugeführt werden, und
- mittels wenigstens einer optischen Weglängeneinstellungseinrichtung (14.0 bis 14.3) eine optische Weglänge in dem Messzweig (3.0) und/oder dem wenigstens einen Referenzzweig (3.1 bis 3.3) verändert wird,
**dadurch gekennzeichnet,**
**dass** an den wenigstens drei Orten an dem zweiten Objekt (4.2) jeweils eine Lichtempfangseinheit (10.1 bis 10.3) angebracht wird, den Lichtempfangseinheiten (10.1 bis 10.3) von der Lichtemissionseinrichtung (5) ausgesendetes Licht zugeführt wird, jeder Lichtempfangseinheit (10.1 bis 10.3) ein Lichtdetektor (20.1 bis 20.3) in der Lichtdetektionseinrichtung (22) zugeordnet wird und von jeder Lichtempfangseinheit (10.1 bis 10.3) dem ihr zugeordneten Lichtdetektor (20.1 bis 20.3) über einen Lichtleiter (12.1 bis 12.3) von der jeweiligen Lichtempfangseinheit (10.1 bis 10.3) empfangenes Licht zugeführt wird, wobei jede der wenigstens drei Lichtempfangseinheiten (10.1 bis 10.3) eine Kollimatoreinheit (13.1 bis 13.3) umfasst, mittels derer Licht zu einem Lichtleiterende (11.1 bis 11.3) des jeweiligen Lichtleiters (12.1 bis 12.3) hin gebündelt wird,
und ferner **dadurch gekennzeichnet, dass**
- entweder Licht der Lichtquelle (1) mittels der ersten Strahlteileinheit (2) auf einen Messzweig (3.0), der die Lichtwege zwischen dem wenigstens einen Ort an dem ersten Objekt (4.1) und dem jeweiligen der wenigstens drei Orte an dem zweiten Objekt (4.2) umfasst, und genau einen Referenzzweig (3.1) aufgeteilt wird, der genau eine Referenzzweig (3.1) mittels einer zweiten Strahlteileinheit (17) in wenigstens drei Teilreferenzzweige (18.1 bis 18.3) aufgeteilt wird, Licht aus jedem der Teilreferenzzweige (18.1 bis 18.3) jeweils einem der Lichtdetektoren (20.1 bis 20.3) zugeführt wird, mittels einer ersten optischen Weglängeneinstellungseinrichtung (14.0) eine optische Weglänge in dem genau einen Referenzzweig (3.1) zwischen der ersten Strahlteileinheit (2) und der zweiten Strahlteileinheit (17) oder in dem Messzweig (3.0) zwischen der ersten Strahlteileinheit (2) und der Lichtemissionseinrichtung (5) verändert wird, und mittels weiterer optischer Weglängeneinstellungseinrichtungen (14.1 bis 14.3) in jedem der wenigstens drei Teilreferenzzweige (18.1 bis 18.3) eine optische Weglänge verändert wird,
- oder Licht der Lichtquelle (1) mittels der ersten Strahlteileinheit (2) auf einen Messzweig (3.0), der die Lichtwege zwischen dem wenigstens einen Ort an dem ersten Objekt (4.1) und dem jeweiligen der wenigstens drei Orte an dem zweiten Objekt (4.2) umfasst, und wenigstens drei Referenzzweige (3.1 bis 3.3) aufgeteilt wird, Licht aus jedem der Referenzzweige (3.1 bis 3.3) jeweils einem der Lichtdetektoren (20.1 bis 20.3) zugeführt wird, und mittels einer ersten optischen Weglängeneinstellungseinrichtung (14.0) eine optische Weglänge in dem Messzweig (3.0) zwischen der ersten Strahlteileinheit (2) und der Lichtemissionseinrichtung (5) verändert wird, und mittels weiterer optischer Weglängeneinstellungseinrichtungen (14.1 bis 14.3) in jedem der wenigstens drei Referenzzweige (3.1 bis 3.3) eine optische Weglänge verändert wird,
und dass mittels jedes der Lichtdetektoren (20.1 bis 20.3) ein Lichtintensitätssignal (S 1 bis S3) erzeugt wird, das von einer Lichtintensität abhängt, die durch eine Interferenz des dem jeweiligen Lichtdetektor (20.1 bis 20.3) zugeführten Lichts aus einem Referenzzweig (3.1 bis 3.3) oder Teilreferenzzweig (18.1 bis 18.3) und aus dem Messzweig (3.0) entsteht, und dass dieses Lichtintensitätssignal (S1 bis S3) der Auswertungseinheit (21) zugeführt wird.

10. Verfahren nach Anspruch 9,
**dadurch gekennzeichnet,**
**dass** mittels der ersten optischen Weglängeneinstellungseinrichtung (14.0) eine optische Weglänge schneller verändert wird als mit jeder der weiteren optischen Weglängeneinstellungseinrichtungen (14.1 bis 14.3).

11. Verfahren nach einem der Ansprüche 9 oder 10,
**dadurch gekennzeichnet,**
**dass** eine Richtung, in welche Licht von dem wenigstens einen Ort an dem ersten Objekt (4.1) abgestrahlt wird, derart gesteuert wird, dass die Abstrahlrichtung zu den wenigstens drei Orten an dem zweiten Objekt (4.2) hin ausgerichtet wird.

## Claims

1. An arrangement for a determination of a position and/or orientation of a first object (4.1) and of a second object (4.2) relative to one another by an interferometric determination of optical path lengths between at least one location on the first object (4.1) and every of at least three locations on the second object (4.2), comprising:
- a light source (1) of coherent radiation,
- a first beam splitter unit (2) by means of which the light of the light source (1) is splittable to one measurement branch (3.0) and to at least one reference branch (3.1 through 3.3),
- a light emission means (5) which is permanently mountable in the measurement branch (3.0) on the first object (4.1) and by means of which light is emittable into a space between the two objects (4.1, 4.2),
- a light detection means (22) to which light is feedable from the measurement branch (3.0) and from at least one reference branch (3.1 through 3.3), and
- an evaluation unit (21) to which light intensity signals (S1 through S3) are feedable
from the light detection means (22),
**characterized by**:
- at least three optical receiver units (10.1 through 10.3) permanently mountable at the second object (4.2),
- an optical waveguide unit which comprises one optical waveguide (12.1 through 12.3) for each of the at least three optical receiver units (10.1 through 10.3), by means of which optical waveguide (12.1 through 12.3) light received by the corresponding optical receiver unit (10.1 through 10.3) is feedable to the light detection means (22),
- at least one optical path length setting means (14.0 through 14.3) in the measurement branch (3.0) and/or in the at least one reference branch (3.1 through 3.3), by means of which an optical path length is modifiable,
- the at least three optical receiver units (10.1 through 10.3) each comprising one optical waveguide end (11.1 through 11.3) of one of the optical waveguides (12.1 through 12.3) of the optical waveguide unit through which optical waveguide end light is launchable into the corresponding optical waveguide (12.1 through 12.3), and
- the light detection means (22) comprising, for every optical receiver unit (10.1 through 10.3), one light detector (20.1 through 20.3) to which light received by the corresponding optical receiver unit (10.1 through 10.3) is feedable by means of the corresponding optical waveguide (12.1 through 12.3), and
- each of the at least three optical receiver units (10.1 through 10.3) comprising a collimator unit (13.1 through 13.3) by means of which light may be bundled towards the optical waveguide end (11.1 through 11.3) of the corresponding optical waveguide (12.1 through 12.3),
and, furthermore, **characterized by**
- either a first beam splitter unit (2), by means of which light of the light source (1) is splittable to the measurement branch (3.0) and precisely one reference branch (3.1), a second beam splitter unit (17), by means of which the precisely one reference branch (3.1) is splittable into at least three part reference branches (18.1 through 18.3), elements for conducting light from the at least three part reference branches (18.1 and 18.3) each to one of the light detectors (20.1 through 20.3), a first optical path length setting means (14.0) in the precisely one reference branch (3.1) between the first beam splitter unit (2) and the second beam splitter unit (17) or in the measurement branch (3.0) between the first beam splitter unit (2) and the light emission means (5), and a further optical path length setting means (14.1 through 14.3) in every of the at least three part reference branches (18.1 through 18.3),
- or a first beam splitter unit (2), by means of which light of the light source (1) is splittable to the measurement branch (3.0) and at least three reference branches (3.1 through 3.3), elements for conducting light from every of the at least three reference branches (3.1 through 3.3) each to one of the light detectors (20.1 through 20.3), and a first optical path length setting means (14.0) in the measurement branch (3.0) between the first beam splitter unit (2) and the light emission means (5), and a further optical path length setting means (14.2 through 14.4) in every of the at least three reference branches (3.1 through 3.3), wherein every light detector (20.1 through 20.3) may generate a light intensity signal (S1 through S3) which depends on a light intensity which is created by an interference of the light fed to the corresponding light detector (20.1 through 20.3) from a reference branch (3.1 through 3.3) or part reference branch (18.1 through 18.3) and the measurement branch (3.0), these light intensity signals (S1 through S3) each being feedable to the evaluation unit (21).

2. An arrangement as claimed in claim 1,
**characterized in**
**that** the first optical path length setting means (14.0) has a shorter range than any of the further optical path length setting means (14.1 through 14.3) such that an optical path length is modifiable more quickly by the first optical path length setting means (14.0) than by any of the further optical path length setting means (14.1 through 14.3).

3. An arrangement as claimed in any preceding claim,
**characterized in**
**that** the first optical path length setting means (14.0) comprises a piezo element by means of which an optical path length is modifiable.

4. An arrangement as claimed in any preceding claim,
**characterized in**
**that** each of the further optical path length setting means (14.1 through 14.3) comprises a mechanical linear-motion drive by means of which an optical path length is modifiable.

5. An arrangement as claimed in any preceding claim,
**characterized in**
**that** the light emission means (5) comprises a number of light emitters (6.1 through 6.3) and a change-over unit (7) by means of which light from the measurement branch (3.0) is feedable to a selectable subset of the light emitters (6.1 through 6.3).

6. An arrangement as claimed in any preceding claim,
**characterized in**
**that** the light emission means (5) comprises a light conduction means by means of which a direction is controllable into which light is emittable from the light emission means (5).

7. An arrangement as claimed in claim 6,
**characterized in**
**that** the light conduction means comprises a galvanometer scanner.

8. An arrangement as claimed in any preceding claim,
**characterized by**
a light source (1) by means of which spectrally broad-band radiation with a short coherence length is emittable.

9. A method for a determination of position and/or orientation of a first object (4.1) and of a second object (4.2) relative to one another from distances of at least one location on the first object (4.1) to at least three non-collinear locations on the second object (4.2), each of these distances being determined by an interferometric determination of an optical path length between at least one location on the first object (4.1) and the corresponding of at least three locations at the second object (4.2), wherein
- a coherent radiation is emitted by means of a light source (1),
- light of the light source (1) is split by means of a first beam splitter unit (2) to one measurement branch (3.0) and at least one reference branch (3.1 through 3.3),
- light is emitted into a space between the two objects (4.1,4.2) by means of a light emission means (5) which is firmly mounted in the measurement branch (3.0) at the first object (4.1),
- light from the measurement branch (3.0) and from the at least one reference branch (3.1 through 3.3) is fed to a light detection means (22),
- light intensity signals (S1 through S3) are fed to the light detection means (22) of an evaluation unit (21), and,
- by means of at least one optical path length setting means (14.0 through 14.3), an optical path length is modified in the measurement branch (3.0) and/or the at least one reference branch (3.1 through 3.3),
**characterized in that**
one optical receiver unit (10.1 through 10.3) is mounted at least at three locations on the second object (4.2) reespectively, light emitted from the light emission means (5) is fed to the optical receiver units (10.1 through 10.3), one light detector (20.1 through 20.3) is assigned to every optical receiver unit (10.1 through 10.3) in the light detection means (22), and light received by the corresponding optical receiver unit (10.1 through 10.3) is fed by every optical receiver unit (10.1 through 10.3) via an optical waveguide (12.1 through 12.3) to the light detector (20.1 through 20.3) associated to such optical receiver unit (10.1 through 10.3), each of the at least three optical receiver units (10.1 and 10.3) comprising a collimator unit (13.1 and 13.3) by means of which light is bundled towards one optical waveguide end (11.1 through 11.3) of the corresponding optical waveguide (12.1 through 12.3),
and, furthermore, **characterized in that**
- either light of the light source (1) is split using the first beam splitter unit (2) to one measurement branch (3.0), which comprises the optical paths between the at least one location on the first object (4.1) and the corresponding one of the at least three locations on the second object (4.2), and precisely one reference branch (3.1), the precisely one reference branch (3.1) is split using a second beam splitter unit (17) into at least three part reference branches (18.1 through 18.3), light from each of the part reference branches (18.1 through 18.3) is fed each to one of the light detectors (20.1 through 20.3), a first optical path length setting means (14.0) is used to modify an optical path length in the precisely one reference branch (3.1) between the first beam splitter unit (2) and the second beam splitter unit (17) or in the measurement branch (3.0) between the first beam splitter unit (2) and the light emission means (5), and further optical path length setting means (14.1 through 14.3) are used to modify an optical path length in every of the at least three part reference branches (18.1 through 18.3),
- or light of the light source (1) is split using the first beam splitter unit (2) to one measurement branch (3.0), which comprises the optical paths between the at least one location on the first object (4.1) and the corresponding one of the at least three locations on the second object (4.2), and at least three reference branches (3.1 through 3.3), light from each of the reference branches (3.1 through 3.3) is each fed each to one of the light detectors (20.1 through 20.3), and a first optical path length setting means (14.0) is used to modify an optical path length in the measurement branch (3.0) between the first beam splitter unit (2) and the light emission means (5), and further optical path length setting means (14.1 through 14.3) are used to modify an optical path length in every of the at least three reference branches (3.1 through 3.3),
and that the light detectors (20.1 through 20.3) are each used to generate a light intensity signal (S1 through S3), which depends on a light intensity which is created by an interference of the light fed to the corresponding light detector (20.1 through 20.3) from a reference branch (3.1 through 3.3) or part reference branch (18.1 through 18.3) and from the measurement branch (3.0), and that this light intensity signal (S1 through S3) is fed to the evaluation unit (21).

10. A method as claimed in claim 9,
**characterized in**
**that** the first optical path length setting means (14.0) is used to modify an optical path length faster than by using every of the further optical path length setting means (14.1 through 14.3).

11. A method as claimed in any claim 9 to 10,
**characterized in**
**that** a direction, into which light is emitted from the at least one location on the first object (4.1), is controlled in such a way that the direction of emission is aligned towards the at least three locations on the second object (4.2).

## Revendications

1. Dispositif de détermination d'une position et/ou d'une orientation d'un premier objet (4.1) et d'un deuxième objet (4.2) l'un par rapport à l'autre par détermination interférométrique de longueurs de trajet optique entre au moins un emplacement sur le premier objet (4.1) et chaque emplacement parmi au moins trois emplacements sur le deuxième objet (4.2), comprenant :
- une source lumineuse (1) de rayonnement cohérent,
- une première unité séparatrice de faisceau (2), au moyen de laquelle la lumière de la source lumineuse (1) est séparable en une branche de mesure (3.0) et au moins une branche de référence (3.1 à 3.3),
- un dispositif d'émission lumineuse (5) fixement applicable sur le premier objet (4.1) dans la branche de mesure (3.0), au moyen duquel la lumière peut être diffusée dans un espace entre les objets (4.1, 4.2),
- un dispositif de détection de lumière (22), vers lequel peut être conduite la lumière de la branche de mesure (3.0) et de la ou des branches de référence (3.1 à 3.3), et
- une unité d'évaluation (21), vers laquelle peuvent être conduits des signaux d'intensité lumineuse (S1 à S3) du dispositif de détection de lumière (22),
**caractérisé par** :
- au moins trois unités réceptrices de lumière (10.1 à 10.3) fixement applicables sur le deuxième objet (4.2),
- un dispositif de conduction lumineuse, comprenant un conducteur optique (12.1 à 12.3) pour chacune des au moins trois unités réceptrices de lumière (10.1 à 10.3), au moyen duquel la lumière reçue par chaque unité réceptrice de lumière (10.1 à 10.3) peut être conduite vers le dispositif de détection de lumière (22), et
- au moins un dispositif de réglage de longueur de trajet optique (14.0 à 14.3) dans la branche de mesure (3.0) et/ou la ou les branches de référence (3.1 à 3.3), au moyen duquel une longueur de trajet optique peut être modifiée,
- les au moins trois unités réceptrices de lumière (10.1 à 10.3) comprenant chacune une extrémité de conducteur optique (11.1 à 11.3) d'un des conducteurs optiques (12.1 à 12.3) du dispositif de conduction lumineuse, par laquelle la lumière peut être couplée au conducteur optique (12.1 à 12.3) correspondant, et
- le dispositif de détection de lumière (22) comprenant un détecteur de lumière (20.1 à 20.3) pour chaque unité réceptrice de lumière (10.1 à 10.3), vers lequel peut être conduite la lumière reçue par chaque unité réceptrice de lumière (10.1 à 10.3) au moyen du conducteur optique (12.1 à 12.3) correspondant, et
- chacune des au moins trois unités réceptrices de lumière (10.1 à 10.3) comprenant une unité de collimateur (13.1 à 13.3), au moyen de laquelle la lumière peut être groupée en faisceau vers l'extrémité de conducteur optique (11.1 à 11.3) de chaque conducteur optique (12.1 à 12.3),
et **caractérisé en outre par**
- soit une première unité séparatrice de faisceau (2), au moyen de laquelle la lumière de la source lumineuse (1) est séparable en la branche de mesure (3.0) et une seule branche de référence (3.1), une deuxième unité séparatrice de faisceau (17), au moyen de laquelle l'unique branche de référence (3.1) est séparable en au moins trois sous-branches de référence (18.1 à 18.3), des éléments de conduction de la lumière de chacun des au moins trois sous-branches de référence (18.1 à 18.3) vers un des détecteurs de lumière (20.1 à 20.3), un premier dispositif de réglage de longueur de trajet optique (14.0) dans l'unique branche de référence (3.1) entre la première unité séparatrice de faisceau (2) et la deuxième unité séparatrice de faisceau (17), ou dans la branche de mesure (3.0) entre la première unité séparatrice de faisceau (2) et le dispositif d'émission lumineuse (5), et un autre dispositif de réglage de longueur de trajet optique (14.1 à 14.3) dans chacune des au moins trois sous-branches de référence (18.1 à 18.3),
- soit une première unité séparatrice de faisceau (2), au moyen de laquelle la lumière de la source lumineuse (1) est séparable en la branche de mesure (3.0) et au moins trois branches de référence (3.1 à 3.3), des éléments de conduction de la lumière de chacun des au moins trois branches de référence (3.1 à 3.3) vers un des détecteurs de lumière (20.1 à 20.3), et un premier dispositif de réglage de longueur de trajet optique (14.0) dans la branche de mesure (3.0) entre la première unité séparatrice de faisceau (2) et le dispositif d'émission lumineuse (5), et un autre dispositif de réglage de longueur de trajet optique (14.2 à 14.4) dans chacune des au moins trois sous-branches de référence (3.1 à 3.3),
un signal d'intensité lumineuse (S1 à S3) pouvant être généré par chaque détecteur de lumière (20.1 à 20.3), lequel est fonction d'une intensité lumineuse formée par une interférence de la lumière d'une branche de référence (3.1 à 3.3) ou d'une sous-branche de référence (18.1 à 18.3) et de la branche de mesure (3.0) conduite vers le détecteur de lumière (20.1 à 20.3) correspondant, chacun desdits signaux d'intensité lumineuse (S1 à S3) pouvant être conduit vers l'unité d'évaluation (21).

2. Dispositif selon la revendication 1,
**caractérisé**
**en ce que** le premier dispositif de réglage de longueur de trajet optique (14.0) présente une course inférieure à celle de chacun des autres dispositifs de réglage de longueur de trajet optique (14.1 à 14.3), si bien qu'une longueur de trajet optique peut être modifiée au moyen du premier dispositif de réglage de longueur de trajet optique (14.0) plus rapidement qu'avec chacun des autres dispositifs de réglage de longueur de trajet optique (14.1 à 14.3).

3. Dispositif selon l'une des revendications précédentes,
**caractérisé**
**en ce que** le premier dispositif de réglage de longueur de trajet optique (14.0) comprend un élément piézoélectrique au moyen duquel une longueur de trajet optique peut être variée.

4. Dispositif selon l'une des revendications précédentes,
**caractérisé**
**en ce que** chacun des autres dispositifs de réglage de longueur de trajet optique (14.1 à 14.3) comprend un entraînement linéaire mécanique au moyen duquel une longueur de trajet optique peut être variée.

5. Dispositif selon l'une des revendications précédentes,
**caractérisé**
**en ce que** le dispositif d'émission lumineuse (5) comporte une pluralité émetteurs lumineux (6.1 à 6.3) et une unité de commutation (7) au moyen de laquelle la lumière de la branche de mesure (3.0) peut être conduite vers une fraction sélectionnable des émetteurs lumineux (6,1 à 6.3).

6. Dispositif selon l'une des revendications précédentes,
**caractérisé**
**en ce que** le dispositif d'émission lumineuse (5) comprend un dispositif de guidage lumineux au moyen duquel peut être commandée une direction de rayonnement de la lumière du dispositif d'émission lumineuse (5).

7. Dispositif selon la revendication 6,
**caractérisé**
**en ce que** le dispositif de guidage lumineux comprend un scanner galvanométrique.

8. Dispositif selon l'une des revendications précédentes,
**caractérisé par**
une source lumineuse (1) au moyen de laquelle un rayonnement à large bande spectrale peut être émis avec une courte longueur de cohérence.

9. Procédé de détermination d'une position et/ou d'une orientation d'un premier objet (4.1) et d'un deuxième objet (4.2) l'un par rapport à l'autre à partir des distances entre au moins un emplacement sur le premier objet (4.1) et au moins trois emplacement non colinéaires sur le deuxième objet (4.2), chacune de ces distances étant saisie par détermination interférométrique d'une longueur de trajet optique entre l'emplacement ou les emplacements sur le premier objet (4.1) et l'emplacement correspondant des au moins trois emplacements sur le deuxième objet (4.2),
- un rayonnement cohérent étant émis au moyen d'une source lumineuse (1),
- la lumière de la source lumineuse (1) étant séparée en une branche de mesure (3.0) et au moins une branche de référence (3.1 à 3.3) au moyen d'une première unité séparatrice de faisceau (2),
- la lumière étant diffusée dans un espace entre les deux objets (4.1, 4.2) au moyen d'un dispositif d'émission lumineuse (5) fixement appliqué sur le premier objet (4.1) dans la branche de mesure (3.0),
- la lumière de la branche de mesure (3.0) et de la ou des branches de référence (3.1 à 3.3) étant conduite vers un dispositif de détection de lumière (22),
- des signaux d'intensité lumineuse (S1 à S3) du dispositif de détection de lumière (22) étant conduits vers une unité d'évaluation (21), et
- une longueur de trajet optique dans la branche de mesure (3.0) et/ou la ou les branches de référence (3.1 à 3.3) étant modifiée au moyen d'au moins un dispositif de réglage de longueur de trajet optique (14.0 à 14.3),
**caractérisé**
**en ce qu'**une unité réceptrice de lumière (10.1 à 10.3) est appliquée à chacun des au moins trois emplacements sur le deuxième objet (4.2), la lumière diffusée par le dispositif d'émission lumineuse (5) est conduite vers les unités réceptrices de lumière (10.1 à 10.3), un détecteur de lumière (20.1 à 20.3) est associé à chaque unité réceptrice de lumière (10.1 à 10.3) dans le dispositif de détection de lumière (22), et la lumière reçue par chaque unité réceptrice de lumière (10.1 à 10.3) est conduite de chaque unité réceptrice de lumière (10.1 à 10.3) par un conducteur optique (12.1 à 12.3) vers le détecteur de lumière (20.1 à 20.3) qui lui est associé, chacune des au moins trois unités réceptrices de lumière (10.1 à 10.3) comprenant une unité de collimateur (13.1 à 13.3), au moyen de laquelle la lumière peut être groupée en faisceau vers une extrémité de conducteur optique (11.1 à 11.3) de chaque conducteur optique (12.1 à 12.3),
et **caractérisé en outre en ce que**
- soit la lumière de la source lumineuse (1) est séparée au moyen de la première unité séparatrice de faisceau (2) en une branche de mesure (3.0) comprenant les trajets lumineux entre l'emplacement ou les emplacements sur le premier objet (4.1) et l'emplacement correspondant des au moins trois emplacements sur le deuxième objet (4.2), et en une seule branche de référence (3.1), l'unique branche de référence (3.1) est séparée en au moins trois sous-branches de référence (18.1 à 18.3) au moyen d'une deuxième unité séparatrice de faisceau (17), la lumière de chacune des sous-branches de référence (18.1 à 18.3) est conduite vers un des détecteurs de lumière (20.1 à 20.3) correspondant, une longueur de trajet optique est modifiée dans l'unique branche de référence (3.1) entre la première unité séparatrice de faisceau (2) et la deuxième unité séparatrice de faisceau (17) ou dans la branche de mesure (3.0) entre la première unité séparatrice de faisceau (2) et le dispositif d'émission lumineuse (5) au moyen d'un premier dispositif de réglage de longueur de trajet optique (14.0), et une longueur de trajet optique est modifiée au moyen d'autres dispositifs de réglage de longueur de trajet optique (14.1 à 14.3) dans chacune des au moins trois sous-branches de référence (18.1 à 18.3).
- soit la lumière de la source lumineuse (1) est séparée au moyen de la première unité séparatrice de faisceau (2) en une branche de mesure (3.0) comprenant les trajets lumineux entre l'emplacement ou les emplacements sur le premier objet (4.1) et l'emplacement correspondant des au moins trois emplacements sur le deuxième objet (4.2), et au moins trois branches de référence (3.1 à 3.3), la lumière de chacune des branches de référence (3.1 à 3.3) est conduite vers un des détecteurs de lumière (20.1 à 20.3) correspondant, et une longueur de trajet optique est modifiée dans la branche de mesure (3.0) entre la première unité séparatrice de faisceau (2) et le dispositif d'émission lumineuse (5) au moyen d'un premier dispositif de réglage de longueur de trajet optique (14.0), et une longueur de trajet optique est modifiée au moyen d'autres dispositifs de réglage de longueur de trajet optique (14.1 à 14.3) dans chacune des au moins trois branches de référence (3.1 à 3.3),
et **en ce qu'**un signal d'intensité lumineuse (S1 à S3) est généré au moyen de chaque détecteur de lumière (20.1 à 20.3), lequel est fonction d'une intensité lumineuse formée par une interférence de la lumière d'une branche de référence (3.1 à 3.3) ou d'une sous-branche de référence (18.1 à 18.3) et de la branche de mesure (3.0) conduite vers le détecteur de lumière (20.1 à 20.3) correspondant, et **en ce que** ledit signal d'intensité lumineuse (S1 à S3) est conduit vers l'unité d'évaluation (21).

10. Procédé selon la revendication 9,
**caractérisé**
**en ce qu'**une longueur de trajet optique peut être modifiée au moyen du premier dispositif de réglage de longueur de trajet optique (14.0) plus rapidement qu'avec chacun des autres dispositifs de réglage de longueur de trajet optique (14.1 à 14.3).

11. Procédé selon la revendication 9 ou la revendication 10,
**caractérisé**
**en ce qu'**une direction de rayonnement de la lumière depuis l'emplacement ou les emplacements sur le premier objet (4.1) est commandée de telle manière que la direction de rayonnement cible les au moins trois emplacements sur le deuxième objet (4.2).
